# EUROPEAN PATENT APPLICATION

(11) **EP 4 769 812 A1**
(43) Date of publication of application: **01.07.2026**
(21) Application number: 24920561.8
(22) Date of filing: 25.11.2024
(51) Int. Cl.: H01M 50/533, H01M 50/102, H01M 50/258

(54) **BATTERY CELL AND CELL ASSEMBLY COMPRISING SAME**

(30) Priority: 22.01.2024 KR 20240009658
(71) Applicant: LG Energy Solution, Ltd., Seoul 07335 (KR)
(72) Inventor: SEON, Sang Ok, Daejeon 34122 (KR); KIM, Jee Won, Daejeon 34122 (KR)
(74) Representative: Hoffmann Eitle
(86) International application number: PCT/KR2024/018730
(87) International publication number: WO 2025/159310

(57) **Abstract**

The present invention relates to a battery cell. A battery cell according to one aspect of the present invention comprises: a cell body that accommodates an electrode laminate; and an electrode lead electrically connected to the electrode laminate, wherein the electrode lead may include: a lead body portion provided on one side of the cell body; and a recessed portion that is recessed inwardly from an edge of the lead body portion but is open in a thickness direction of the lead body portion.

## Description

### TECHNICAL FIELD

### CROSS-REFERENCE TO RELATED APPLICATIONS

The present application claims priority to Korean Patent Application No. 10-2024-0009658 filed on January 22, 2024 in the Republic of Korea, the disclosures of which are incorporated herein by reference.

### TECHNICAL FIELD

The present disclosure relates to a battery cell and a cell assembly including the same, and more specifically, to a battery cell composed of a secondary battery and a cell assembly including the same.

### BACKGROUND ART

In general, types of secondary batteries include nickel cadmium batteries, nickel hydrogen batteries, lithium-ion batteries, and lithium-ion polymer batteries. These secondary batteries are applied and used not only in small products such as digital cameras, P-DVDs, MP3Ps, mobile phones, PDAs, portable game devices, power tools, and E-bikes, but also in large products requiring high power such as electric vehicles or hybrid vehicles, in power storage devices that store surplus generated power or renewable energy, and in power storage devices for backup.

Secondary batteries may be provided in the form of a battery cell. The battery cell is classified into a cylindrical, prismatic, or pouch type, depending on the shape of the exterior material where it is accommodated, and it is roughly classified into a jelly roll type in which a separator is interposed between a long sheet-like positive electrode and negative electrode coated with an active material and wound, a stack type in which a plurality of positive electrodes and negative electrodes of a predetermined size are sequentially stacked with a separator interposed therebetween, and a stack/folding type in which the stack-type unit cells are wound with a long separation film, depending on the shape of the electrode assembly.

Meanwhile, several battery cells may be coupled to form a cell assembly. This may be to increase the electric capacity or voltage that can be charged and discharged. To this end, the electrode leads of the battery cells may be coupled to each other. The electrode leads are conductive members protruding or extending to the outside of the battery cell, and are configured to connect the electrode assembly provided inside the battery cell to an external power source, load, or element. These electrode leads are generally provided in the form of films, sheets, wires, busbars, or metal pieces.

However, conventionally, a welding process was used to couple the electrode leads of the battery cells to each other. The electrode leads of the battery cells were electrically coupled by directly welding each other or by welding them together to one busbar as an intermediate medium.

This conventional coupling method had problems of not only bending the electrode leads to stack and modularize the battery cells, but also requiring additional parts such as busbars for performing the welding process. Additionally, after several battery cells were welded together, it was difficult to select and separate only particular battery cells among them.

Accordingly, there has been a need to develop a battery cell and a cell assembly including the same that can be coupled to other neighboring battery cells without using a welding process.

### SUMMARY

### TECHNICAL PROBLEM

The present disclosure is designed to solve the problems of the related art, and therefore the present disclosure is directed to providing a battery cell that can be coupled to other neighboring battery cells without using a welding process and a cell assembly including the same.

Technical problems to be solved by the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, there is provided a battery cell including a cell body accommodating an electrode stack; and an electrode lead electrically connected to the electrode stack, wherein the electrode lead includes a lead body portion provided on one side of the cell body; and a recessed portion concavely recessed inward from an edge of the lead body portion and opened in a thickness direction of the lead body portion.

At this time, the recessed portion may be provided to allow electrode leads of other neighboring battery cells to be coupled in a shape-fitting manner.

At this time, the recessed portion may be formed through the lead body portion in the thickness direction.

At this time, the electrode lead may further include an inner coupling portion convexly protruding or concavely recessed on an inner wall of the recessed portion.

At this time, the inner coupling portion may be provided in plurality.

At this time, the inner wall of the recessed portion may include a first surface formed in the thickness direction of the lead body portion; and a second surface facing the first surface, wherein the inner coupling portion may include a first inner coupling portion formed on the first surface; and a second inner coupling portion formed on the second surface.

At this time, the lead body portion may extend in one direction along the edge of the cell body, and the first surface and the second surface may be disposed to face each other in the one direction.

At this time, the electrode lead may further include an outer coupling portion convexly protruding or concavely recessed on an outer surface of the lead body portion.

At this time, the outer coupling portion may be spaced apart from the recessed portion in a direction in which the recessed portion is recessed.

At this time, the outer coupling portion may be provided in plurality.

At this time, the outer coupling portion may include a first outer coupling portion formed on one surface of the lead body portion; and a second outer coupling portion formed on the other surface of the lead body portion to be opposite to the first outer coupling portion.

At this time, the electrode lead may further include an inner coupling portion convexly protruding or concavely recessed on an inner wall of the recessed portion; and an outer coupling portion convexly protruding or concavely recessed on an outer surface of the lead body portion, wherein one of the inner coupling portion and the outer coupling portion may be convexly protruding and the other may be concavely recessed.

At this time, the recessed portions may be provided in plurality and disposed to be spaced apart along the edge of the lead body portion.

At this time, the electrode leads may be provided as a pair.

At this time, the pair of electrode leads may be disposed opposite to each other centering around the cell body.

At this time, the lead body portion may have a plate shape.

According to another aspect of the present disclosure, there is provided a cell assembly including a plurality of battery cells each including a cell body accommodating an electrode stack; and an electrode lead that is electrically connected to the electrode stack, and includes a plate-shaped lead body portion provided on one side of the cell body and a recessed portion concavely recessed inward from an edge of the lead body portion and opened in a thickness direction of the lead body portion, wherein electrode leads of neighboring battery cells among the plurality of battery cells are coupled to each other in a shape-fitting manner.

At this time, the plurality of battery cells may include first and second battery cells, wherein the lead body portion of the first battery cell and the lead body portion of the second battery cell may be disposed to be orthogonal to each other, and the recessed portion of the first battery cell and the recessed portion of the second battery cell may be coupled to each other.

At this time, the plurality of battery cells may include the first and second battery cells, wherein the electrode lead of the first battery cell may further include an inner coupling portion convexly protruding or concavely recessed on an inner wall of the recessed portion, and the electrode lead of the second battery cell may further include an outer coupling portion convexly protruding or concavely recessed on an outer surface of the lead body portion, wherein one of the inner coupling portion and the outer coupling portion may be convexly protruding and the other may be concavely recessed, and the inner coupling portion of the first battery cell and the outer coupling portion of the second battery cell may be coupled to each other in a shape-fitting manner.

At this time, the recessed portions may be provided in n (n is a natural number of 2 or more) and disposed to be spaced apart along an edge of the lead body portion, and the plurality of battery cells may include n battery cells stacked in a first direction; and n battery cells stacked in a second direction orthogonal to the first direction, wherein n battery cells stacked in the second direction may be coupled to n recessed portions of the battery cells stacked in the first direction in a shape-fitting manner, respectively.

### ADVANTAGEOUS EFFECTS

According to one aspect of the present disclosure, the electrode lead of a battery cell includes a recessed portion concavely recessed inward from the edge and opened in the thickness direction, so that the electrode lead of neighboring battery cells may be coupled to the recessed portion in a shape-fitting manner.

Accordingly, a battery cell and a cell assembly including the same according to one aspect of the present disclosure may be coupled to other neighboring battery cells without using a welding process to be electrically connected.

According to one aspect of the present disclosure, an outer coupling portion and/or an inner coupling portion are provided on the electrode lead, which may be coupled to the electrode lead of other battery cells coupled to the recessed portion in a shape-fitting manner, thereby allowing the battery cells to be coupled and connected more strongly.

According to one aspect of the present disclosure, the recessed portions of the electrode lead are provided in plurality and disposed to be spaced apart along the edge, so that a plurality of other battery cells may be coupled and connected thereto in a shape-fitting manner.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a perspective view of a battery cell according to the first embodiment of the present disclosure.
FIG. 2 is an enlarged view of part A of FIG. 1.
FIG. 3 is a perspective view of part A of FIG. 1 viewed from another angle.
FIG. 4 is a perspective view of part A of FIG. 1 viewed from still another angle.
FIG. 5 is a perspective view of a cell assembly according to the first embodiment of the present disclosure.
FIG. 6 is a vertical cross-sectional view showing a state in which electrode leads of the cell assembly shown in FIG. 5 are coupled to each other.
FIG. 7 is a horizontal cross-sectional view showing a state in which electrode leads of the cell assembly shown in FIG. 5 are coupled to each other.
FIG. 8 is a perspective view of a battery cell according to the second embodiment of the present disclosure.
FIG. 9 is a perspective view of a cell assembly according to the second embodiment of the present disclosure.
FIG. 10 is a perspective view of a cell assembly according to the third embodiment of the present disclosure.

### DETAILED DESCRIPTION

Preferred embodiments of the present disclosure will be described in detail to enable those having ordinary skill in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

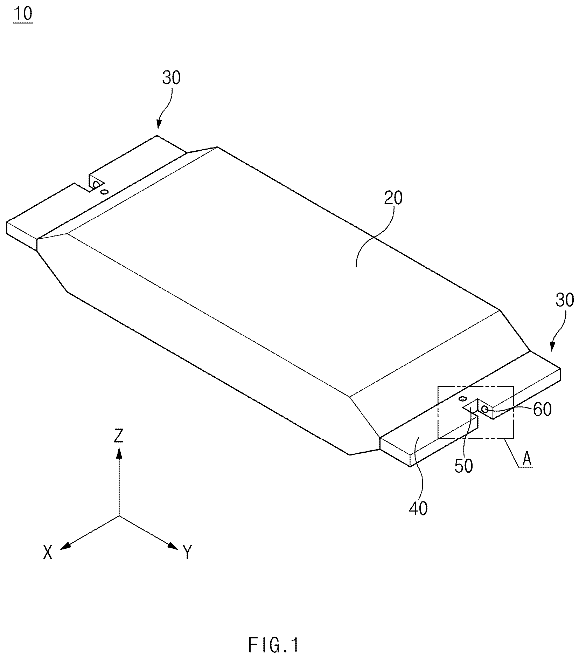

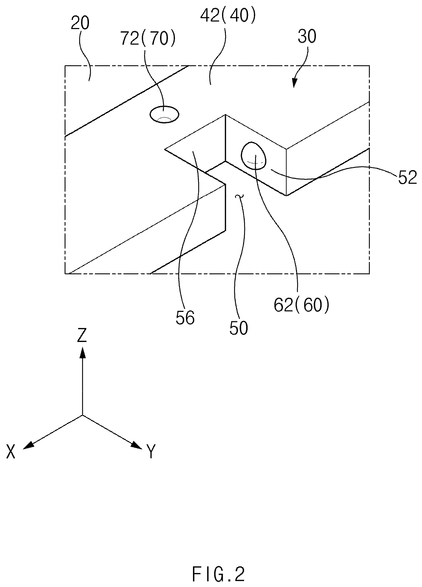

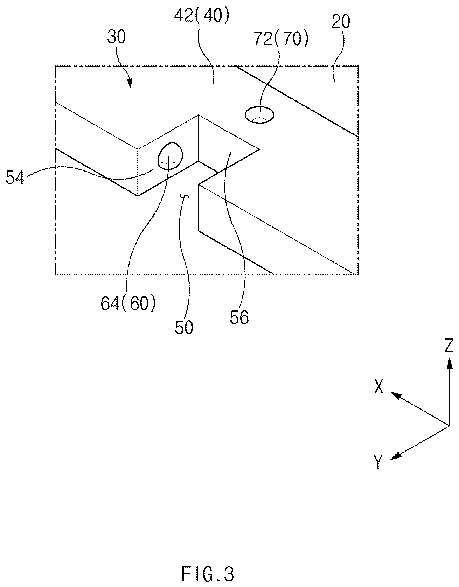

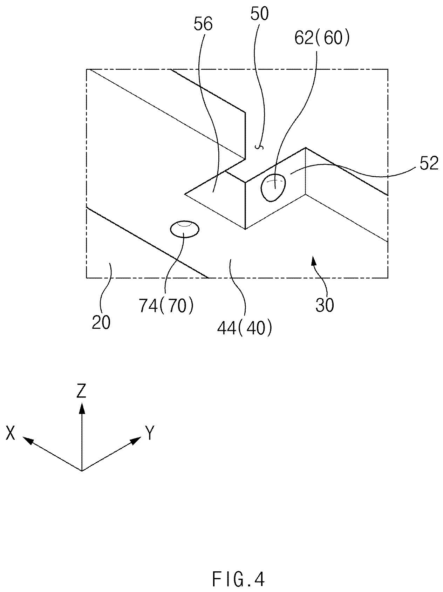

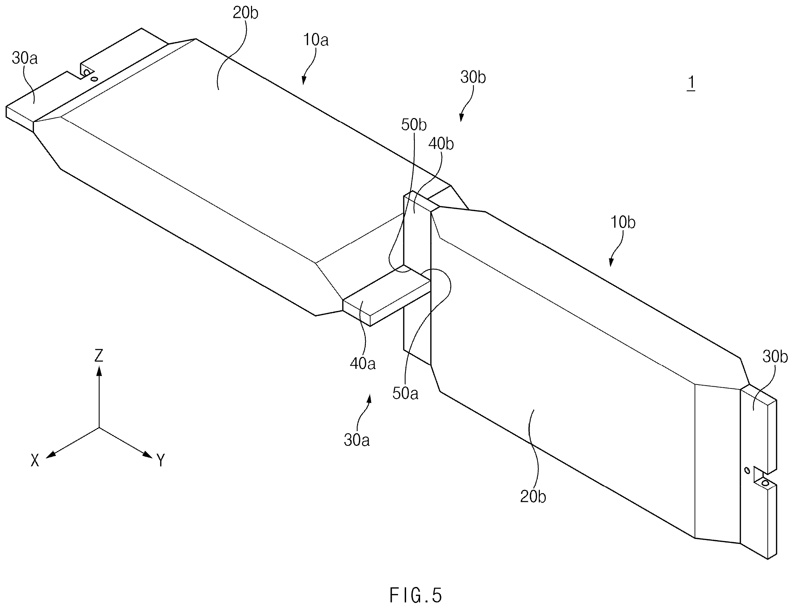

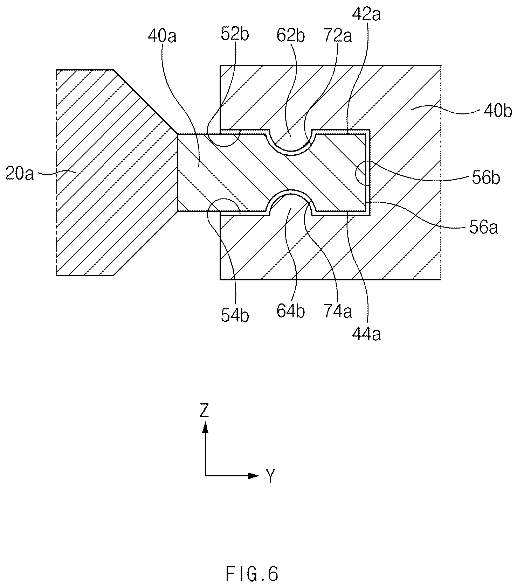

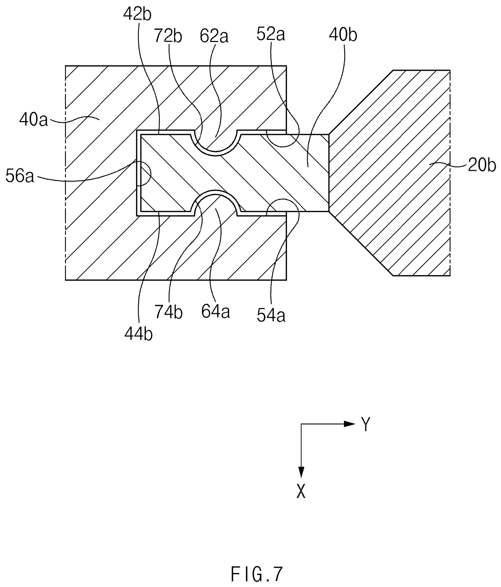

FIG. 1 is a perspective view of a battery cell according to the first embodiment of the present disclosure. FIG. 2 is an enlarged view of part A of FIG. 1. FIG. 3 is a perspective view of part A of FIG. 1 viewed from another angle. FIG. 4 is a perspective view of part A of FIG. 1 viewed from still another angle. FIG. 5 is a perspective view of a cell assembly according to the first embodiment of the present disclosure. FIG. 6 is a vertical cross-sectional view showing a state in which electrode leads of the cell assembly shown in FIG. 5 are coupled to each other. FIG. 7 is a horizontal cross-sectional view showing a state in which electrode leads of the cell assembly shown in FIG. 5 are coupled to each other.

FIG. 5 discloses a cell assembly 1 according to the first embodiment of the present disclosure. Referring to FIG. 5, the cell assembly 1 according to the first embodiment of the present disclosure may be an assembly in which a plurality of battery cells 10a, 10b are coupled to each other to be electrically connected. Accordingly, the electric capacity and voltage charged and discharged in this cell assembly 1 may be increased.

At this time, in the cell assembly 1 according to this embodiment, the plurality of battery cells 10a, 10b are coupled to each other in a shape-fitting manner to be electrically connected. That is, in this embodiment, the battery cells 10a, 10b may be coupled without using a welding process.

Through this, the cell assembly 1 according to this embodiment may improve problems arising from the coupling method by a welding process.

For example, according to this embodiment, additional components such as busbars for the welding process may not be required. As another example, according to this embodiment, electrode leads 30a, 30b of the battery cells 10a, 10b do not need to be bent for welding. As still another example, according to this embodiment, only certain battery cells 10a, 10b may be separated from several battery cells 10a, 10b coupled to each other, thereby reducing the maintenance cost of this cell assembly 1 and increasing the recycling rate.

Hereinafter, the configuration of the battery cells 10a, 10b constituting the cell assembly 1 according to the first embodiment of the present disclosure will be described in detail. The battery cells 10a, 10b may be battery cells according to the first embodiment of the present disclosure.

Referring to FIG. 1, the battery cell 10 according to the first embodiment of the present disclosure may include a cell body 20. The cell body 20 may be composed of an electrode assembly responsible for the charging and discharging function of the battery cell 10 and a case accommodating the electrode assembly.

In this embodiment, the electrode assembly may be composed of a negative electrode, a positive electrode, and a separator interposed therebetween. The electrode assembly may be provided in a stack type, a stack-fold type, or a jellyroll type, but the type or structure thereof is not particularly limited. In this embodiment, the case may be provided in a pouch type, a prismatic type, or a cylindrical type, but the type or structure thereof is not particularly limited.

In this embodiment, it will be described on the premise that the cell body 20 is formed of a block-shaped body extending in the left-right direction (Y-axis direction) as shown.

Referring to FIGS. 1 to 4, the battery cell 10 according to the first embodiment of the present disclosure may include an electrode lead 30. The electrode lead 30 is configured to electrically connect the electrode assembly provided in the cell body 20 to an external load, power source, or another neighboring battery cell.

In this embodiment, the electrode lead 30 may include a lead body portion 40 made of a conductive material. The lead body portion 40 may be provided on one side of the cell body 20.

At this time, in this embodiment, the lead body portion 40 is configured to be coupled to the neighboring battery cell in a shape-fitting manner, so that it is preferable for the lead body portion 40 to have a predetermined rigidity to ensure that the coupling remains stable.

To this end, the lead body portion 40 may be provided as a block-shaped member or plate having a predetermined thickness in the vertical direction (Z-axis direction). And, at least a part of the lead body portion 40 may be positioned inside the cell body 20 and may be directly or indirectly connected to the electrode assembly.

Meanwhile, in this embodiment, the lead body portion 40 may extend along the edge of the cell body 20. As shown, the lead body portion 40 may extend along the edge provided in the front-back direction (X-axis direction) on the right (positive direction of the Y-axis) of the cell body 20.

Of course, the lead body portion 40 may be formed to be at least partially curved as necessary in consideration of the shape of the cell body 20, the coupling structure with other battery cells, and the like.

Meanwhile, referring to FIGS. 2 to 4 again, the electrode lead 30 of the battery cell according to the first embodiment of the present disclosure may include a recessed portion 50. The recessed portion 50 is a portion where other neighboring battery cells are coupled in a shape-fitting manner in the electrode lead 30.

In this embodiment, the recessed portion 50 may be formed on the edge of the lead body portion 40. As an example, the edge of the lead body portion 40 may be an edge extending in the front-back direction (X-axis direction) on the right (positive direction of the Y-axis) of the lead body portion 40 as shown in FIG. 2.

And, the recessed portion 50 may be positioned approximately at a center portion of the edge of the lead body portion 40. Of course, the position of the recessed portion 50 may be appropriately adjusted according to the coupling structure with the neighboring battery cell.

In this embodiment, the recessed portion 50 may be formed by being recessed to the left (negative direction of the Y-axis) from the edge of the lead body portion 40 toward the inside of the lead body portion 40. And, the recessed portion 50 may be opened in the thickness direction of the lead body portion 40.

More specifically, as shown in FIGS. 1 and 2, the recessed portion 50 may be formed through the lead body portion 40 in the vertical direction (Z-axis direction) that is the thickness direction of the lead body portion 40. In other words, the upper part of the recessed portion 50 may be opened through the upper surface 42 of the lead body portion 40, and the lower part thereof may be opened through the lower surface 44 of the lead body portion 40.

This configuration may be for the electrode leads of other neighboring battery cells to be inserted through the recessed portion 50 of this battery cell 10 in the thickness direction (i.e., vertical direction) of the lead body portion 40. As a result, the battery cells may be coupled to each other in a shape-fitting manner.

Meanwhile, referring to FIGS. 2 to 4, in this embodiment, the recessed portion 50 may include first to third surfaces 52 to 56. The first to third surfaces 52 to 56 may be surfaces forming the inner wall of the recessed portion 50.

In this embodiment, the first surface 52 may be a surface formed in the vertical direction (Z-axis direction) that is the thickness direction of the lead body portion 40. The side provided on the upper part of the first surface 52 may be connected to the upper surface 42 of the lead body portion 40, and the side provided on the lower part of the first surface 52 may be connected to the lower surface 44 of the lead body portion 40.

In this embodiment, the second surface 54 may be a surface facing the first surface 52 and spaced apart in a predetermined direction. At this time, the direction in which the first surface 52 and the second surface 54 are spaced apart may be the front-back direction (X-axis direction) that is the extension direction of the lead body portion 40.

Accordingly, an electrode lead of another battery cell may be interposed between the first surface 52 and the second surface 54. At this time, the distance between the first surface 52 and the second surface 54 (hereinafter referred to as the width of the recessed portion 50) may be equal to or slightly larger than the thickness of the electrode lead of the other battery cell.

Here, the difference between the width of the recessed portion 50 and the thickness of the electrode lead of the other battery cell may be determined in consideration of the tolerance for fitting coupling. As a result, the electrode leads of other battery cells may be fitted between the first surface 52 and the second surface 54, so that the coupling force between the battery cells may be further increased.

Meanwhile, in this embodiment, the second surface 54 may extend in the thickness direction (i.e., vertical direction) of the lead body portion 40 to be parallel to (or side by side with) the first surface 52. The side provided on the upper part of the second surface 54 may be connected to the upper surface 42 of the lead body portion 40, and the side provided on the lower part of the second surface 54 may be connected to the lower surface 44 of the lead body portion 40.

However, the first surface 52 and the second surface 54 may be inclined at a predetermined angle with respect to each other as necessary, or the first surface 52 and the second surface 54 may include a curved surface.

In this embodiment, a third surface 56 may be provided between the first surface 52 and the second surface 54. The third surface 56 may not be parallel to the first and second surfaces 52, 54. As shown, the third surface 56 may be perpendicular to the first and second surfaces 52, 54.

As a result, the first surface 52 and the second surface 54 may be connected by the third surface 56. More specifically, the front side part of the third surface 56 may be connected to one side provided on the left (negative direction of the Y axis) of the first surface 52, and the rear side part of the third surface 56 may be connected to one side provided on the left (negative direction of the Y axis) of the second surface 54.

And, in this embodiment, the third surface 56 may extend in the thickness direction (i.e., vertical direction) of the lead body portion 40. The side provided on the upper part of the third surface 56 may be connected to the upper surface 42 of the lead body portion 40, and the side provided on the lower part may be connected to the lower surface 44 of the lead body portion 40.

This third surface 56 may perform the function of limiting the depth at which the electrode lead of another battery cell is inserted into the recessed portion 50 during the process of coupling the electrode lead thereof to the recessed portion 50.

Referring to FIGS. 2 to 5 again, the electrode lead 30 of the battery cell according to the first embodiment of the present disclosure may include an inner coupling portion 60. The inner coupling portion 60 is configured to increase the coupling force between this battery cell and another battery cell.

In this embodiment, the inner coupling portion 60 may be formed on an inner wall of the recessed portion 50. As shown, the inner coupling portion 60 may protrude from the inner wall of the recessed portion 50. Through this, the electrode lead of another battery cell inserted into the recessed portion 50 may be caught by the inner coupling portion 64. This may increase the coupling force between the battery cells.

As an example, the inner coupling portion 60 may have a convex hemispherical or semi-elliptical shape, but is not limited thereto. As another example, the inner coupling portion 60 may be provided in the shape of a polygonal pyramid or polygonal prism, or may be provided in a curved hook shape.

At this time, in this embodiment, the inner coupling portion 60 may be provided in plurality. As shown, the inner coupling portion 60 may include a first inner coupling portion 62 formed on the first surface 52 and a second inner coupling portion 64 formed on the second surface 54.

As a result, the electrode lead of another battery cell inserted into the recessed portion 50 may be caught on both surfaces by the first and second inner coupling portions 62, 64, respectively, and thus may be more strongly fixed to the inside of the recessed portion 50.

Referring to FIGS. 1 to 4 again, the electrode lead 30 of the battery cell according to the first embodiment of the present disclosure may include an outer coupling portion 70. The outer coupling portion 70 is configured to increase the coupling force between this present battery cell and another battery cell.

In this embodiment, the outer coupling portion 70 may be formed on the outer surface of the lead body portion 40. As shown, the outer coupling portion 70 may be formed to be recessed concavely in the outer surface of the lead body portion 40.

As an example, the outer coupling portion 70 may have a concave groove shape in a hemispherical or semi-elliptical shape. As another example, the outer coupling portion 70 may be provided in the form of a ring in which a hook shape may be caught, or may be provided in the form of a groove in which the inner space is a polygonal pyramid or polygonal prism.

This configuration may be to increase the coupling force between battery cells by allowing a protruding part (e.g., the inner coupling portion) provided on the electrode lead of another battery cell to be caught by the outer coupling portion 70 provided on the electrode lead 30 of this battery cell.

At this time, in this embodiment, the outer coupling portion 70 may be configured in plurality. The plurality of outer coupling portions 70 may include a first outer coupling portion 72 formed on the upper surface 42 of the lead body portion 40 as shown in FIG. 3. And, the plurality of outer coupling portions 70 may include a second outer coupling portion 74 formed on the lower surface 44 of the lead body portion 40 as shown in FIG. 5.

At this time, in this embodiment, the first outer coupling portion 72 and the second outer coupling portion 74 may be disposed oppositely in the thickness direction (i.e., vertical direction) of the lead body portion 40. As a result, a more compact coupling structure between the battery cells may be provided.

Meanwhile, in this embodiment, the outer coupling portion 70 may be positioned to be spaced apart from the recessed portion 50 in a direction in which the recessed portion 50 is recessed. Based on FIG. 1, the outer coupling portion 70 is positioned to be spaced apart from the recessed portion 50 to the left (negative direction of the Y-axis).

As shown in FIGS. 3 and 4, the first outer coupling portion 72 may be positioned to be spaced apart from the recessed portion 50 to the left between the recessed portion 50 and the cell body 20. As shown in FIG. 5, the second outer coupling portion 74 may be positioned to be spaced apart from the recessed portion 50 to the left between the recessed portion 50 and the cell body 20.

This may be a configuration in consideration of the coupling method of battery cells. Specifically, the electrode leads of other battery cells are coupled while moving along the direction in which the recessed portion 50 is recessed. That is, the electrode leads of other battery cells move along a path formed in the direction of being recessed. Therefore, as one part of the electrode lead is inserted into the recessed portion 50, the other part faces the outer coupling portion 70 and may be coupled in a shape-fitting manner.

Meanwhile, in this embodiment, the inner coupling portion 60 is configured to protrude convexly and the outer coupling portion 70 is configured to be recessed concavely, but if necessary, the inner coupling portion 60 may be configured to be recessed concavely and the outer coupling portion 70 may be configured to protrude convexly.

Referring to FIG. 1 again, in this embodiment, the electrode leads 30 may be configured as a pair. At this time, one of the pair of electrode leads 30 may be a positive electrode lead connected to the positive electrode of the electrode assembly, and the other may be a negative electrode lead connected to the negative electrode of the electrode assembly.

At this time, in this embodiment, the pair of electrode leads 30 may be disposed opposite to each other centering around the cell body 20. Of course, the relative positions of the pair of electrode leads 30 may be appropriately changed as necessary.

Meanwhile, in this embodiment, the pair of electrode leads 30 are shown as having the same shape. However, the pair of electrode leads 30 may be configured to have different shapes or structures as necessary.

Hereinafter, a cell assembly according to the first embodiment of the present disclosure will be described with different drawings.

Referring to FIG. 5, the cell assembly 1 according to the first embodiment of the present disclosure may include a plurality of battery cells 10a, 10b. At this time, the plurality of battery cells 10a, 10b may include a first battery cell 10a and a second battery cell 10b that are adjacent to each other and coupled in a shape-fitting manner. At this time, in this embodiment, the first and second battery cells 10a, 10b may be the battery cells 10 shown in FIGS. 1 to 4.

Referring to FIG. 5 again, in this embodiment, the lead body portion 40a of the first battery cell 10a and the lead body portion 40b of the second battery cell 10b may be disposed to be orthogonal to each other.

In other words, the lead body portion 40a of the first battery cell 10a may be arranged in a thickness direction of the lead body portion 40b of the second battery cell 10b, and the lead body portion 40b of the second battery cell 10b may be arranged in a thickness direction of the lead body portion 40a of the first battery cell 10a. Here, the thickness direction of the lead body portion 40b of the second battery cell 10b may be the front-back direction (X-axis direction) in the drawing, and the thickness direction of the lead body portion 40a of the first battery cell 10a may be the vertical direction (Z-axis direction) in the drawing.

This arrangement may be to allow the recessed portion 50a of the first battery cell 10a and the recessed portion 50b of the second battery cell 10b to be coupled by fitting each other in a shape-fitting manner. This is because the recessed portions 50a, 50b are open in the thickness direction of the lead body portions 40a, 40b where they are formed.

Hereinafter, a structure in which the recessed portion 50a of the first battery cell 10a and the recessed portion 50b of the second battery cell 10b are coupled to each other will be described in detail.

Referring to FIGS. 5 and 6, as the recessed portion 50a of the first battery cell 10a and the recessed portion 50b of the second battery cell 10b are fitted to each other, a side part of the lead body portion 40a of the first battery cell 10a may be fitted into the recessed portion 50b of the second battery cell 10b. That is, the lead body portion 40a of the first battery cell 10a may be inserted between the first surface 52b and the second surface 54b of the second battery cell 10b.

Accordingly, the upper surface 42a and the lower surface 44a of the lead body portion 40a of the first battery cell 10a may be disposed adjacent to the first surface 52b and the second surface 54b of the recessed portion 50b of the second battery cell 10b, respectively, while facing each other. And, the third surface 56a of the recessed portion 50a of the first battery cell 10a and the third surface 56b of the recessed portion 50b of the second battery cell 10b may be disposed adjacent to each other while facing each other.

Here, disposing the two surfaces adjacent to each other may mean that the two surfaces are in surface contact with each other, or, even if they are not in surface contact with each other, they are spaced apart by a very small distance compared to the width or length.

At this time, the first and second inner coupling portions 62b, 64b of the second battery cell 10b may be fitted into the first and second outer coupling portions 72a, 74a of the first battery cell 10a in a shape-fitting manner, respectively. As a result, the inner coupling portions 62b, 64b are caught by the outer coupling portions 72a, 74a, so that the lead body portion 40a of the first battery cell 10a may not be detached from the recessed portion 50b of the second battery cell 10b.

Likewise, referring to FIGS. 5 and 7, as the recessed portion 50a of the first battery cell 10a and the recessed portion 50b of the second battery cell 10b are fitted to each other, a side part of the lead body portion 40b of the second battery cell 10b may be fitted into the recessed portion 50a of the first battery cell 10a. That is, the lead body portion 40b of the second battery cell 10b may be inserted between the first surface 52a and the second surface 54a of the first battery cell 10a.

Accordingly, the upper surface 42b and the lower surface 44b of the lead body portion 40b of the second battery cell 10b may be disposed adjacent to the first surface 52a and the second surface 54a of the recessed portion 50a of the first battery cell 10a, respectively, while facing each other. And, the third surface 56b of the recessed portion 50b of the second battery cell 10b and the third surface 56a of the recessed portion 50a of the first battery cell 10a may be disposed adjacent to each other while facing each other.

At this time, the first and second inner coupling portions 62a, 64a of the first battery cell 10a may be fitted into the first and second outer coupling portions 72b, 74b of the second battery cell 10b in a shape-fitting manner, respectively. As a result, the inner coupling portions 62a, 64a are caught by the outer coupling portions 72b, 74b, so that the lead body portion 40b of the second battery cell 10b may not be detached from the recessed portion 50a of the first battery cell 10a.

As described above, in the cell assembly 1 according to the first embodiment of the present disclosure, the electrode leads 30 of the battery cells 10 are coupled to the electrode leads 30 of other neighboring battery cells 10 in a shape-fitting manner without using a welding process. Accordingly, problems caused by the welding process may be improved in the cell assembly 1 according to this embodiment.

Hereinafter, a battery cell and cell assemblies including the same according to another embodiment of the present disclosure will be described with different drawings.

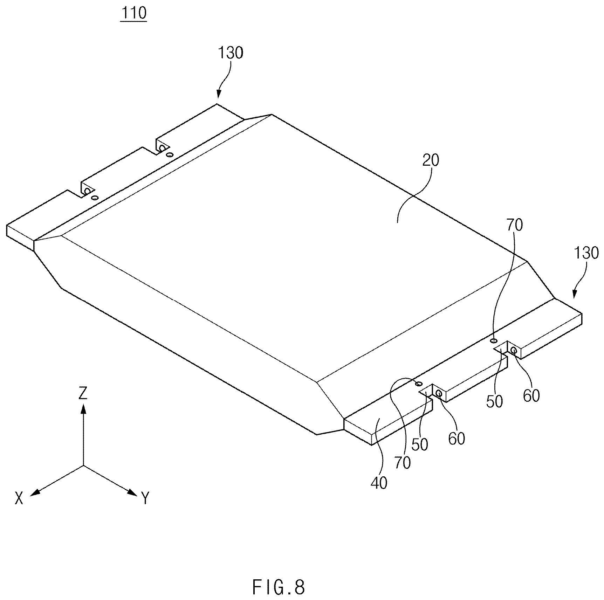

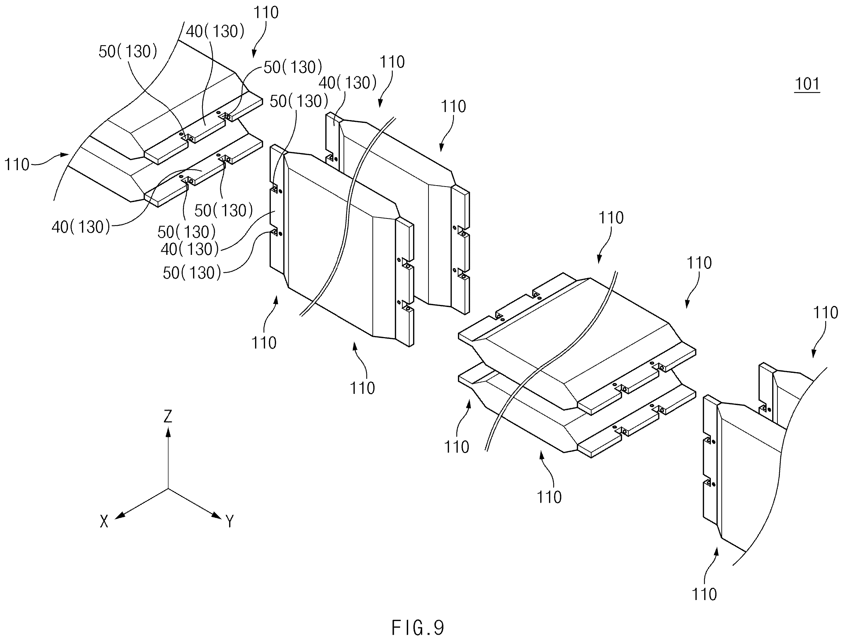

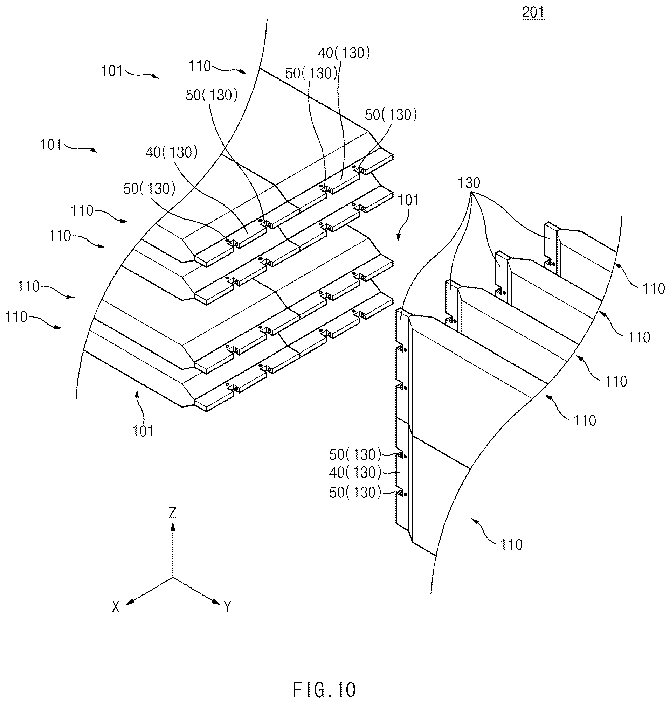

FIG. 8 is a perspective view of a battery cell according to the second embodiment of the present disclosure. FIG. 9 is a perspective view of a cell assembly according to the second embodiment of the present disclosure. FIG. 10 is a perspective view of a cell assembly according to the third embodiment of the present disclosure. At this time, the same reference numerals as in the drawings shown above indicate the same members performing the same functions.

FIG. 8 discloses a battery cell 110 according to the second embodiment of the present disclosure.

Referring to FIG. 8, the battery cell 110 according to the second embodiment of the present disclosure may include a cell body 20 and an electrode lead 130, wherein the electrode lead 130 may include a lead body portion 40, a recessed portion 50, an inner coupling portion 60, and an outer coupling portion 70.

At this time, in the battery cell 110 according to the second embodiment of the present disclosure, the recessed portions 50 of the electrode lead 130 may be configured in n numbers. As an example, as shown, the recessed portions 50 may be configured in two. And, the n recessed portions 50 may be arranged to be spaced apart along the edge of the lead body portion 40.

In this embodiment, each of the recessed portions 50 may be configured such that electrode leads of different battery cells are coupled in a shape-fitting manner. Accordingly, a maximum of n different battery cells may be coupled to one battery cell 110 to be electrically connected.

Meanwhile, in this embodiment, the inner coupling portions 60 and the outer coupling portions 70 may be configured in n numbers corresponding to the number of recessed portions 50. And, the n inner coupling portions 60 and outer coupling portions 70 may be positioned to correspond to the n recessed portions 50, respectively. Through this configuration, the coupling force of the battery cells coupled to this battery cell 110 may be further increased.

FIG. 9 discloses a cell assembly 101 according to the second embodiment of the present disclosure.

Referring to FIG. 9, the cell assembly 101 according to the second embodiment of the present disclosure may be formed by a plurality of battery cells 110 being coupled to each other. At this time, the battery cell 110 may be a battery cell 110 according to the second embodiment of the present disclosure. More specifically, the electrode lead 130 of the battery cell 110 may each include n recessed portions 50.

Meanwhile, the cell assembly 101 according to the second embodiment of the present disclosure may include n battery cells 110 stacked in the vertical direction (Z-axis direction). As an example, n may be 2 as shown in FIG. 9. And, the n battery cells 110 may be disposed such that the lead body portion 40 faces the front-back direction (X-axis direction).

In this embodiment, the cell assembly 101 may include n battery cells 110 stacked in the front-back direction (X-axis direction) perpendicular to the vertical direction (Z-axis direction). As an example, n may be 2 as shown. And, the n battery cells 110 may be disposed such that the lead body portion 40 faces the vertical direction (Z-axis direction).

In this embodiment, recessed portions 50 of n battery cells 110 stacked in the front-back direction (X-axis direction) may be coupled to n recessed portions 50 included in the battery cells 110 stacked in the vertical direction (Z-axis direction) in a shape-fitting manner, respectively.

In other words, recessed portions 50 of n battery cells 110 stacked in the vertical direction (Z-axis direction) may be coupled to n recessed portions 50 included in the battery cells 110 stacked in the front-back direction (X-axis direction) in a shape-fitting manner, respectively.

Meanwhile, the cell assembly 101 according to the second embodiment of the present disclosure may further include n battery cells 110 stacked in the front-back direction (X-axis direction) and/or n battery cells 110 stacked in the vertical direction (Z-axis direction). And, these battery cells 110 may be arranged in a row alternately along the left-right direction (Y-axis direction) and may be coupled to each other in a shape-fitting manner. Through this, the cell assembly 101 may have a larger electric capacity and/or voltage.

FIG. 10 discloses a cell assembly 201 according to the third embodiment of the present disclosure. Referring to FIG. 10, the cell assembly 201 according to the third embodiment of the present disclosure may be composed of a plurality of unit cell assemblies 201. At this time, the unit cell assembly 201 may be the cell assembly 101 according to the second embodiment of the present disclosure described with FIG. 9.

As shown, the plurality of unit cell assemblies 101 may extend side by side with each other along the left-right direction (Y-axis direction). And, the plurality of unit cell assemblies 101 may be arranged in a grid shape along the vertical direction (Z-axis direction) and the front-back direction (X-axis direction). Through this, more battery cells 110 may be electrically connected within a limited space without using a welding process.

Meanwhile, in this embodiment, a method in which the plurality of unit cell assemblies 101 are arranged is not particularly limited. As an example, the plurality of unit cell assemblies 101 may be stacked only in the vertical direction (Z-axis direction), or may be stacked only in the front-back direction (X-axis direction).

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1, 101, 201: Cell assembly
10, 110: Battery cell
20: Cell body
30, 130: Electrode lead
40: Lead body portion
50: Recessed portion
60: Inner coupling portion
70: Outer coupling portion

## Claims

1. A battery cell comprising:
a cell body accommodating an electrode stack; and
an electrode lead electrically connected to the electrode stack,
wherein the electrode lead comprises:
a lead body portion provided on one side of the cell body; and
a recessed portion concavely recessed inward from an edge of the lead body portion and opened in a thickness direction of the lead body portion.

2. The battery cell according to claim 1,
wherein the recessed portion is provided to allow electrode leads of other neighboring battery cells to be coupled in a shape-fitting manner.

3. The battery cell according to claim 1,
wherein the recessed portion is formed through the lead body portion in the thickness direction.

4. The battery cell according to claim 1,
wherein the electrode lead further comprises an inner coupling portion convexly protruding or concavely recessed on an inner wall of the recessed portion.

5. The battery cell according to claim 4,
wherein the inner coupling portion is provided in plurality.

6. The battery cell according to claim 5,
wherein the inner wall of the recessed portion comprises:
a first surface formed in the thickness direction of the lead body portion; and
a second surface facing the first surface,
wherein the inner coupling portion comprises:
a first inner coupling portion formed on the first surface; and
a second inner coupling portion formed on the second surface.

7. The battery cell according to claim 6,
wherein the lead body portion extends in one direction along the edge of the cell body, and
the first surface and the second surface are disposed to face each other in the one direction.

8. The battery cell according to claim 1,
wherein the electrode lead further comprises an outer coupling portion convexly protruding or concavely recessed on an outer surface of the lead body portion.

9. The battery cell according to claim 8,
wherein the outer coupling portion is spaced apart from the recessed portion in a direction in which the recessed portion is recessed.

10. The battery cell according to claim 8,
wherein the outer coupling portion is provided in plurality.

11. The battery cell according to claim 10,
wherein the outer coupling portion comprises:
a first outer coupling portion formed on one surface of the lead body portion; and
a second outer coupling portion formed on the other surface of the lead body portion to be opposite to the first outer coupling portion.

12. The battery cell according to claim 1,
wherein the electrode lead further comprises:
an inner coupling portion convexly protruding or concavely recessed on an inner wall of the recessed portion; and
an outer coupling portion convexly protruding or concavely recessed on an outer surface of the lead body portion,
wherein one of the inner coupling portion and the outer coupling portion is convexly protruding and the other is concavely recessed.

13. The battery cell according to claim 1,
wherein the recessed portions are provided in plurality and disposed to be spaced apart along the edge of the lead body portion.

14. The battery cell according to claim 1,
wherein the electrode leads are provided as a pair.

15. The battery cell according to claim 14,
wherein the pair of electrode leads are disposed opposite to each other centering around the cell body.

16. The battery cell according to claim 1,
wherein the lead body portion has a plate shape.

17. A cell assembly comprising:
a plurality of battery cells each comprising:
a cell body accommodating an electrode stack; and
an electrode lead that is electrically connected to the electrode stack, and comprises a plate-shaped lead body portion provided on one side of the cell body and a recessed portion concavely recessed inward from an edge of the lead body portion and opened in a thickness direction of the lead body portion,
wherein electrode leads of neighboring battery cells among the plurality of battery cells are coupled to each other in a shape-fitting manner.

18. The cell assembly according to claim 17,
wherein the plurality of battery cells comprise first and second battery cells,
wherein the lead body portion of the first battery cell and the lead body portion of the second battery cell are disposed to be orthogonal to each other, and
the recessed portion of the first battery cell and the recessed portion of the second battery cell are coupled to each other.

19. The cell assembly according to claim 17,
wherein the plurality of battery cells comprise first and second battery cells,
wherein the electrode lead of the first battery cell further comprises an inner coupling portion convexly protruding or concavely recessed on an inner wall of the recessed portion, and
the electrode lead of the second battery cell further comprises an outer coupling portion convexly protruding or concavely recessed on an outer surface of the lead body portion,
wherein one of the inner coupling portion and the outer coupling portion is convexly protruding and the other is concavely recessed, and
the inner coupling portion of the first battery cell and the outer coupling portion of the second battery cell are coupled to each other in a shape-fitting manner.

20. The cell assembly according to claim 17,
wherein the recessed portions are provided in n (n is a natural number of 2 or more) and disposed to be spaced apart along an edge of the lead body portion, and
the plurality of battery cells comprise:
n battery cells stacked in a first direction; and
n battery cells stacked in a second direction orthogonal to the first direction,
wherein n battery cells stacked in the second direction are coupled to n recessed portions of the battery cells stacked in the first direction in a shape-fitting manner, respectively.
